# EUROPÄISCHE PATENTSCHRIFT

(11) **EP 4 341 005 B1**
(45) Veröffentlichungstag und Bekanntmachung des Hinweises auf die Patenterteilung: **02.07.2025**
(21) Anmeldenummer: 22728103.7
(22) Anmeldetag: 05.05.2022
(51) Int. Cl.: B05B 14/00

(54) **VERFAHREN ZUM BETREIBEN EINES ANLAGENSYSTEMS**
PROCEDURE FOR OPERATING A PLANT SYSTEM
PROCÉDURE POUR UNE PLANTE

(30) Priorität: 21.05.2021 DE 102021113273
(43) Veröffentlichungstag der Anmeldung: 27.03.2024
(73) Patentinhaber: Eisenmann GmbH, 71032 Böblingen (DE)
(72) Erfinder: ROBBIN, Jörg, 72119 Ammerbuch (DE)
(74) Vertreter: Ostertag & Partner Patentanwälte mbB
(86) Internationale Anmeldenummer: PCT/EP2022/062145
(87) Internationale Veröffentlichungsnummer: WO 2022/243054

(56) Entgegenhaltungen:
- DE-A1- 102015 202 257
- DE-A1- 102019 105 256
- RU-A- 2015 133 796
- US-B2- 9 333 521

## Beschreibung

Die Erfindung betrifft ein Verfahren zum Betreiben eines Anlagensystems zum Beschichten von Gegenständen, insbesondere von Fahrzeugkarosserien bei welchem
a) an einem Betriebsstandort eine Beschichtungsanlage zum Beschichten von Gegenständen vorhanden ist;
b) in der Beschichtungsanlage die Gegenstände in wenigstens einer Beschichtungskabine mit Beschichtungsmaterial beaufschlagt werden, durch welche ein Luftstrom geleitet wird, der entstehendes Overspray des Beschichtungsmaterials aufnimmt und abführt;
   wobei
c) der Luftstrom einer Abscheidevorrichtung der Beschichtungsanlage zugeführt wird, welche mit mehreren Filtermodulen betrieben wird, in denen ein Großteil zumindest der Feststoffe aus dem Overspray abgeschieden wird;
d) jedes Filtermodul nach Erreichen einer Grenzbeladung mit Overspray gegen ein leeres Filtermodul ausgetauscht wird;
e) ein Filtermodul zumindest thermisch teilregenerierbar ist.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren wird der Begriff Overspray immer im Sinne eines dispersen Systems, wie einer Emulsion oder Suspension oder einer Kombination daraus, verstanden. Der Overspray wird von dem Luftstrom in der Beschichtungskabine, im Falle der Lackierung also der Lackierkabine, erfasst und einer Abscheidung zugeführt, sodass die Luft gegebenenfalls nach einer geeigneten Konditionierung wieder in die Beschichtungskabine zurückgeleitet werden kann.

Aus der DE 10 2019 105 256 A1 ist es bekannt, mit austauschbaren Einweg-Filtermodulen zu arbeiten, die nach Erreichen einer Grenzbeladung mit Overspray gegen unbeladene Filtermodule ausgetauscht und thermisch behandelt werden. Die Aufbereitung von derartigen Filtermodulen kann energetisch und auch im Hinblick auf die erforderlichen Ressourcen verträglicher sein als der Aufwand bei anderen Abscheidekonzepten, wie beispielsweise am Markt bekannten Nassabscheidern oder elektrostatisch arbeitenden Abscheidevorrichtungen. Solche Einweg-Filtermodule werden jedoch als Ganzes entsorgt oder recycelt.

Bei Filtermodulen, die zumindest thermisch teilregenerierbar sind, ist es möglich, die Filtermodule in Kreisläufen mehrfach zu verwenden.

Wenn ein Filtermodul thermisch teilregenerierbar ist, umfasst dieses einerseits eine wiederverwertbare Mehrwegstruktur aus einem oder mehreren thermisch regenerierbaren Mehrweg-Bauteilen und andererseits eine Einwegstruktur aus einem oder mehreren thermisch zersetzbaren Einweg-Bauteilen.

Unter einem thermisch regenerierbaren Mehrweg-Bauteil ist ein Bauteil zu verstehen, welches eine thermische Behandlung, bei welcher vorhandener Overspray thermisch zersetzt und hierdurch aus dem Filtermodul entfernt werden, ohne Einbußen seiner Funktionsfähigkeit wenigstens einmal und vorzugsweise wiederholt übersteht. Im Gegensatz dazu wird ein thermisch zersetzbares Einweg-Bauteil bei einer thermischen Behandlung, bei welcher vorhandener Overspray thermisch zersetzt wird, ebenfalls zersetzt, so dass nach der thermischen Behandlung nur noch die Mehrwegstruktur des Filtermoduls übrigbleibt.

Eine geeignete thermische Behandlung ist dabei vorzugsweise eine Pyrolyse.

Ein Filtermodul kann auch vollständig thermisch regenerierbar sein.

Wenn vorliegend von einem Filtermodul im Zusammenhang mit der nachfolgend beschriebenen erfindungsgemäßen Logistik die Rede ist, bezieht sich dies auf ein betriebsbereites Filtermodul, das als vollständig thermisch regenerierbares Filtermodul oder als Filtermodul mit einer Mehrwegstruktur und einer Einwegstruktur ausgebildet sein kann und so als Abscheideeinheit einsetzbar ist, oder auch nur auf die thermisch regenerierbare Mehrwegstruktur, welche zur Betriebsfähigkeit noch um die Komponenten ergänzt werden muss, die bei der thermischen Behandlung zersetzt wurden.

Der Bedarf einer Beschichtungsanlage an Filtermodulen hängt ab von der Menge an erzeugtem Overspray pro Zeit, was seinerseits von dem Durchsatz an Gegenständen, die in der Anlage beschichtet werden, und/oder von der Menge an appliziertem Beschichtungsmaterial abhängt. Je mehr Gegenstände beschichtet werden und/oder je mehr Beschichtungsmaterial appliziert wird, desto mehr Overspray fällt an und desto schneller erreicht ein Filtermodul seine Grenzbeladung und muss ausgetauscht werden.

Heutzutage besteht der Anspruch, dass Anlagensysteme flexibel an geänderte Produktionsmengen oder Lieferabläufe, allgemein an geänderte Prozessabläufe, angepasst werden oder flexibel auf sich verändernde Betriebsumstände reagieren können. Dies bedeutet für eine Beschichtungsanlage an einem Betriebsstandort zum Beispiel, dass sich bei einer Änderung des Prozessablaufs der Durchsatz an zu beschichtenden Gegenständen und/oder der Menge an applizierten Beschichtungsmaterial ändert, was sich wieder auf die Menge an entstehendem Overspray auswirkt.

Änderungen des Prozessablaufs können sich also unmittelbar auf die Anzahl der Filtermodule niederschlagen, die zum Betrieb der Beschichtungsanlage bzw. Abscheidevorrichtung zur Verfügung stehen muss.

Erfahrungswerte zeigen, dass die meisten Anlagen heutzutage in 60% ihrer Betriebszeit nur in Teillast gefahren werden. Um jedoch Durchsatzspitzen Rechnung zu tragen, sind die Beschichtungsanlagen und deren Abscheidevorrichtungen für einen maximalen Durchsatz konzipiert. Dies bedeutet, dass auch stets eine entsprechend hohe Anzahl an Filtermodulen vorgehalten wird, die dann am Betriebsstandort gelagert werden.

Ein betriebsbereites Filtermodul hat ein Raumvolumen zwischen 1 m³ und 4 m³, insbesondere von etwa 2 m³. Der Platzbedarf für die Lagerung eines Filtermoduls oder für die hierfür notwendigen Komponenten und Bauteile ist entsprechend hoch.

Dies führt einerseits zu hohen Grundinvestitionskosten für Filtermodule, von denen über einem Großteil der Betriebszeit der Anlage mehr am Betriebsstandort gelagert werden als benötigt, und andererseits zu einem besonderen Aufwand, um diese vorgehaltenen Filtermodule am Betriebsstandort unterzubringen.

Es ist nun Aufgabe der Erfindung, ein Verfahren der eingangs genannten Art bereitzustellen, durch welches diese Nachteile zumindest verringert werden.

Diese Aufgabe wird bei einem Verfahren der eingangs genannten Art dadurch gelöst, dass
f) die Anzahl der an dem Betriebsstandort zum Betrieb der Abscheidevorrichtung zur Verfügung stehenden Filtermodule eine Ist-Anzahl definiert;
   und
g) die Anzahl der an dem Betriebsstandort zum Betrieb der Abscheidevorrichtung erforderlichen Filtermodule eine Soll-Anzahl definiert;
   und
h) die Differenz zwischen der Ist-Anzahl und der Soll-Anzahl eine Bedarfszahl definiert, wenn die Ist-Anzahl kleiner ist als die Soll-Anzahl, oder eine Überschusszahl definiert, wenn die Ist-Anzahl größer ist als die Soll-Anzahl;
   und
i) ein Filtermodul-Pool bereitgestellt wird, der eine Bestands-Anzahl an Filtermodulen umfasst, von denen zumindest ein Teil an einem Pool-Standort gelagert wird, der von dem Betriebsstandort der Beschichtungsanlage verschieden ist;
   und
j) eine der Bedarfszahl entsprechende Anzahl an Filtermodulen aus dem Filtermodul-Pool physisch an den Betriebsstandort überführt wird, wodurch sich die Ist-Anzahl um die Bedarfszahl erhöht und sich die Bestands-Anzahl um die Bedarfszahl verringert;
   oder
k) eine der Überschusszahl entsprechende Anzahl an Filtermodulen dem Filtermodul-Pool zugeordnet wird, wodurch sich die Ist-Anzahl um die Überschusszahl verringert und sich die Bestands-Anzahl um die Überschusszahl erhöht.

Erfindungsgemäß wird somit ermittelt, ob die Anzahl der für den Betrieb der Abscheidevorrichtung zur Verfügung stehenden Filtermodule, nämlich die Ist-Anzahl, mit der Anzahl an für den Betrieb der Abscheidevorrichtung benötigen Filtermodule, nämlich der Soll-Anzahl, übereinstimmt.

Dabei ist die Soll-Anzahl nicht nur die Anzahl der Filtermodule, die im laufenden Betrieb in der Abscheidevorrichtung angeordnet sind. Vielmehr berücksichtigt die Soll-Anzahl auch die Anzahl der am Betriebsstandort vorzuhaltenden unbeladenen leeren Filtermodule, die für einen reibungslosen und verzögerungsfreien Austausch von beladenen Filtermodulen gegen unbeladene Filtermodule notwendig sind.

Ein Bedarf an für den Betrieb der Beschichtungsanlage bezogen auf die vorhandenen Filtermodule zusätzlich erforderlichen Filtermodule oder ein Überschuss an für den Beitrieb der Beschichtungsanlage nicht mehr benötigten Filtermodule wird über den Filtermodul-Pool ausgeglichen.

Damit unerwartete Ausfälle von Filtermodulen, die beispielsweise durch technische Störungen der Abscheidevorrichtung oder fehlerhaft produzierte Filtermodule verursacht werden können, rasch vor Ort kompensiert werden können, können sowohl die Ist-Anzahl als auch die Soll-Anzahl jeweils eine größere Anzahl an Filtermodulen definieren, als für den Betrieb der Beschichtungsanlage bzw. deren Abscheidevorrichtung bei einem vorgegebenen Prozess eigentlich erforderlich ist. Hierdurch sind stets einige Filtermodule als Sicherheitspuffer am Betriebsstandort vorhanden.

Bei einer Änderung des Prozessablaufs wird die Soll-Anzahl entweder größer oder kleiner, wogegen die Ist-Anzahl zunächst unverändert bleibt, da sich die Zahl der am Betriebsstandort zur Verfügung stehenden Filtermodule nicht ändert. Wenn dann bei Bedarf zusätzliche Filtermodule zu dem Betriebsstandort verbracht oder überschüssige Filtermodule von dem Betriebsstandort entfernt werden, verändert sich die Ist-Anzahl entsprechend und stimmt hiernach wieder mit der Soll-Anzahl überein.

Die Beladung der Filtermodule im laufenden Beschichtungsprozess kann intermittierend oder kontinuierlich ermittelt werden. Die Grenzbeladung eines Filtermoduls hängt unter anderem von der Bauart des Filtermoduls und den verwendeten Materialien hierfür sowie dem Gesamtbetriebsablauf der Beschichtungsanlage und der Beschichtungskabine ab. Die bereits aufgenommene Menge an Beschichtungsmaterial kann mit Hilfe eines Messsystems überwacht werden. Beispielsweise kann hierfür eine Wiegeeinrichtung mit Wiege-Messzellen vorgesehen sein. Alternativ kann die Grenzbeladung mittels einer Differenzdruckbestimmung ermittelt werden. Je größer die Beladung eines Filtermoduls ist, desto größer ist der durch das Filtermodul aufgebaute Luftwiderstand.

Wenn die so ermittelte Beladung einen vorgegebenen Schwellenwert überschreitet, der anzeigt, dass die Grenzbeladung des Filtermoduls bald erreicht ist, können bereits automatisiert Schritte eingeleitet werden, welche die Ist-Anzahl um eins verringert, so dass sich bereits zu einem Zeitpunkt eine geänderte Bedarfszahl ergibt, zu dem die Grenzbeladung des Filtermoduls noch nicht erreicht ist. Auf diese Weise wird das Kontingent an Filtermodulen am Betriebsstandort vorausschauend überwacht und angepasst, so dass ein kontinuierlicher und einwandfreier Betrieb möglich ist. Der anzusetzende Schwellenwert kann für verschiedene Filtermodule unterschiedlich sein und hängt vom Volumen und der Bauart eines Filtermodules ab.

Das Kontingent an Filtermodulen des Filtermodul-Pools wird zumindest zum Teil an einem anderen Ort als dem Betriebsstandort gelagert, so dass am Betriebsstandort der Beschichtungsanlage bzw. der Abscheidevorrichtung hierfür keine entsprechenden Maßnahmen für nicht benötigte Filtermodule ergriffen werden müssen.

Insgesamt eröffnet das erfindungsgemäße Verfahren die Möglichkeit, Ressourcen und Investitionskosten zu sparen, was im Weiteren noch deutlicher wird.

Das Verfahren wird besonders effektiv, wenn
a) die Beschichtungsanlage eine erste Beschichtungsanlage mit einer ersten Abscheidvorrichtung und deren Betriebsstandort ein erster Betriebsstandort ist;
b) eine zweite Beschichtungsanlage mit einer zweiten Abscheidevorrichtung an einem zweiten Betriebsstandort vorhanden ist, der von dem ersten Betriebsstandort verschieden ist, wobei auch die zweite Abscheidevorrichtung mit einer Mehrzahl von Filtermodulen betrieben wird, und wobei die Filtermodule der ersten und der zweiten Abscheidevorrichtung zumindest zueinander kompatibel sind;
c) für die erste Abscheidevorrichtung und die zweite Abscheidevorrichtung jeweils gesondert eine Ist-Anzahl, eine Soll-Anzahl, eine Bedarfszahl und eine Überschusszahl ermittelt wird.

Somit können Filtermodule für die erste Abscheidevorrichtung und/oder für die zweite Abscheidevorrichtung aus dem Filtermodul-Pool entnommen oder von der ersten Beschichtungsanlage und/oder von der zweiten Beschichtungsanlage an den Filtermodul-Pool abgegeben bzw. dem Filtermodul-Pool zugeordnet werden, um auf Veränderungen bei dem Bedarf an Filtermodulen an den Betriebsstandorten zu reagieren.

Die Filtermodule der beiden Beschichtungsanlagen bzw. Abscheidevorrichtungen sind vorzugsweise baugleich; grundsätzlich reicht es jedoch wie angegeben aus, wenn die Filtermodule untereinander kompatibel sind, so dass alle Filtermodule für beide Abscheidevorrichtungen am ersten und am zweiten Betriebsstandort geeignet sind.

Wenn zumindest ein Teil der Filtermodule des Filtermodul-Pools an dem ersten Betriebsstandort und/oder an dem zweiten Betriebsstandort gelagert wird, können Filtermodule, die an einem der beiden Betriebsstandorte nicht benötigt werden, unmittelbar zu dem anderen Betriebsstandort verbracht werden, wenn sich dort ein gegenüber den vorhandenen Filtermodulen höherer Bedarf ergibt. In diesem Fall kann also darauf verzichtet werden, dass Filtermodule erst von dem einen Betriebsstandort, bei dem sich eine Überschusszahl ergeben hat, zu dem Pool-Standort und dann von dort zu dem anderen Betriebsstandort transportiert werden. Wenn an dem Betriebsstandort mit erhöhtem Bedarf noch mehr Filtermodule benötigt werden als von dem anderen Betriebsstandort überführt werden können, d.h. wenn die Bedarfszahl an dem einen Betriebsstandort größer ist als die Überschusszahl an dem anderen Betriebsstandort, werden entsprechend weitere Filtermodule von dem Pool-Standort geliefert.

Das Verfahren wird effektiver, wenn
a) eine dritte Beschichtungsanlage mit einer dritten Abscheidevorrichtung an einem dritten Betriebsstandort oder noch mehrere weitere Beschichtungsanlagen mit jeweils noch einer weiteren Abscheidevorrichtung an noch jeweils weiteren Betriebsstandorten vorhanden sind, die jeweils von dem ersten und dem zweiten Betriebsstandort verschieden sind, wobei auch die dritte oder die noch mehreren weiteren Abscheidevorrichtungen mit einer Mehrzahl von Filtermodulen betrieben werden und die Filtermodule aller Abscheidevorrichtungen zumindest zueinander kompatibel sind;
b) für die dritte oder für jede weitere Abscheidevorrichtung jeweils gesondert eine Ist-Anzahl, eine Soll-Anzahl, eine Bedarfszahl und eine Überschusszahl ermittelt wird.

Dabei können Filtermodule für die vorhandenen Abscheidevorrichtungen bei Bedarf aus dem Filtermodul-Pool entnommen oder von den vorhandenen Abscheidevorrichtungen bei einem Überschuss an den Filtermodul-Pool abgegeben werden, um auf Veränderungen bei dem Bedarf an Filtermodulen an den Betriebsstandorten zu reagieren.

Wenn ein Filtermodulkontingent von einem Betriebsstandort, an dem sich eine Überschusszahl ergeben hat, abgegeben werden kann, kann auch die räumliche Entfernung zu verschiedenen Betriebsstandorten ermittelt und berücksichtigt werden, bei denen ein Bedarf ein zusätzlichen Filtermodulen besteht, um die Transportwege möglichst kurz zu halten.

Im Hinblick auf die Kompatibilität der Filtermodule gilt das oben Gesagte entsprechend.

Vorzugsweise wird dann zumindest ein Teil der Filtermodule des Filtermodul-Pools an einem, mehreren oder allen Betriebsstandorten gelagert, so dass ebenfalls Filtermodule, die an einem Betriebsstandort nicht benötigt werden, unmittelbar zu einem anderen Betriebsstandort transportiert werden können, wenn sich dort ein gegenüber den vorhandenen Filtermodulen höherer Bedarf ergibt.

Abhängig von der Zahl der zu dem Anlagensystem insgesamt gehörenden Beschichtungsanlagen mit Abscheidevorrichtungen an verschiedenen Betriebsstandorten und der dort jeweils geltenden Ist-Anzahl umfasst das Anlagensystem eine System-Gesamtanzahl an Filtermodulen, die gleich der Summe der Ist-Anzahlen der einzelnen vorhandenen Abscheidevorrichtungen und der Bestands-Anzahl des Filtermodul-Pools ist.

Im Extremfall entspricht die System-Gesamtanzahl der Zahl der Filtermodule, die notwendig ist, um alle vorhandenen Abscheidevorrichtungen zeitgleich mit einem jeweils maximalen Bedarf an Filtermodulen zu betreiben, einschließlich der überzähligen Filtermodule, die jeweils als Sicherheitspuffer am Betriebsstandort vorgesehen sind, und gegebenenfalls zuzüglich eines Wartungskontingents an Filtermodulen, um nicht einsatzbereite Filtermodule auszugleichen, die einer Wartung oder Reparatur unterzogen werden. Dies bezieht sich insbesondere auf thermisch regenerierbare Filtermodule.

Das hier erläuterte Fördersystem beruht jedoch auch auf der Erkenntnis, dass eine derart große System-Gesamtanzahl an Filtermodulen in der Regel nicht notwendig sein wird, um das Anlagensystem mit mehreren Abscheidevorrichtungen an verschiedenen Betriebsstandorten zu betreiben, ohne dass es zu Defiziten an Filtermodulen an einem oder mehreren Betriebsstandorten kommt. Folglich kann die System-Gesamtanzahl an Filtermodulen kleiner gehalten werden als die Summe der Filtermodule, die bei mehreren Abscheidevorrichtungen an verschiedenen Betriebsstandorten vorgehalten werden müssten. Hierdurch können die Investitionskosten für jede einzelne Abscheidevorrichtung an ihrem jeweiligen Betriebsstandort gesenkt werden.

Bei dem erläuterten Verfahren können die erste Beschichtungsanlage oder die erste und die weiteren Beschichtungsanlagen von ein und demselben Betreiber betrieben werden, welcher auch die Verwaltung des Filtermodul-Pools und den Transport der Filtermodule zwischen den vorhandenen Betriebsstandorten und dem Pool-Standort übernimmt.

Die Bereitstellung und Koordination des Transportwagen-Pools kann gegebenenfalls durch eine unabhängige bzw. übergeordnete Stelle erfolgen, welche von dem Betreiber der Beschichtungsanlage oder der Beschichtungsanlagen unabhängig ist.

Auch können verschiedene Beschichtungsanlagen mit Abscheidevorrichtungen an unterschiedlichen Betriebsstandorten von zwei oder mehr unterschiedlichen Betreibern betrieben werden, wobei dennoch alle Beschichtungsanlagen mit deren Abscheidevorrichtungen in das Anlagensystem eingebunden und mit dem Filtermodul-Pool verknüpft sind.

Der Transport von Filtermodulen zwischen Betriebsstandorten und/oder dem Pool-Standort kann mit etablierten Versandkonzepten als Stückgut erfolgen. Hierbei können Transporthilfsmittel verwendet werden; beispielsweise können die Filtermodule, gegebenenfalls in einer Transportkiste, auf Euro-Paletten verladen und mit entsprechend hierfür ausgelegten Transportmitteln transportiert werden. Hierzu kommen beispielsweise auch LKW-Transporte durch Speditionen in Frage. Alternativ können auch spezielle, an die Filtermodule angepasste Transportcontainer verwendet werden, in welchen die Filtermodule untergebracht werden.

Das Anlagensystem umfasst vorzugsweise eine zentrale Steuereinrichtung, welche die Ist-Anzahl und die Soll-Anzahl für eine bestimmte Beschichtungsanlage bzw. Abscheidevorrichtung an deren Betriebsstandort empfängt oder abruft und daraus die Bedarfszahl bzw. Überschusszahl berechnet. Alternativ kann eine sich ergebende Bedarfszahl oder Überschusszahl für eine Beschichtungsanlage auch direkt an die zentrale Steuereinrichtung übermittelt werden. Die zentrale Steuereinrichtung verarbeitet die Daten und initiiert je nach Situation, dass Filtermodule zu einer Beschichtungsanlage transportiert werden und hierzu von einer anderen Beschichtungsanlage oder dem Pool-Standort abgeholt werden, oder dass Filtermodule lediglich von einer Beschichtungsanlage abgeholt und zu dem Pool-Standort transportiert werden. Gegebenenfalls erhält die zentrale Steuereinrichtung von einer Beschichtungsanlage, bei der ein Überschuss an Filtermodulen entstanden ist, zusätzlich eine Information, dass die nun dem Filtermodul-Pool zuzuordnenden Filtermodule am Betriebsstandort verbleiben können. Die Steuereinrichtung berechnet durch Algorithmen, die auf das Anlagensystem unter Berücksichtigung der Daten aller Betriebsstandorte und des Filtermodul-Pools abgestimmt sind, die Verteilung von Filtermodule zwischen den einzelnen Betriebsstandorten und dem Pool-Standort.

Die Übermittlung der Daten an die zentrale Steuereinrichtung kann manuell oder automatisch erfolgen. In letzterem Fall soll eine Übermittlung der Daten dann automatisch an die zentrale Steuereinrichtung erfolgen, wenn eine am Betriebsstandort einer betreffenden Beschichtungsanlage bzw. Abscheidevorrichtung vorhandene Steuervorrichtung eine Änderung der Ist-Anzahl oder der Soll-Anzahl registriert, aus denen sich ein geänderter Bedarf an Filtermodulen ergibt.

Im Hinblick auf die Abscheidevorrichtungen kann das erläuterte Verfahren besonders effektiv genutzt werden, wenn Filtermodule verwendet werden, welche vollständig thermisch regenerierbar sind.

Die Vorteile schlagen besonders zu Buche, wenn die Filtermodule des Filtermodul-Pools ein Raumvolumen von 1 m³ bis 4 m³, insbesondere von 2 m³ haben.

Die Filtermodule, die dem Filtermodul-Pool zugeordnet sind, können in Lagereinrichtungen untergebracht sein. Hierzu kommen beispielsweise Lagerhallen mit oder ohne Regalkonzept in Frage.

## Patentansprüche

1. Verfahren zum Betreiben eines Anlagensystems zum Beschichten von Gegenständen, insbesondere von Fahrzeugkarosserien, bei welchem
a) an einem Betriebsstandort eine Beschichtungsanlage zum Beschichten von Gegenständen vorhanden ist;
b) in der Beschichtungsanlage die Gegenstände in wenigstens einer Beschichtungskabine mit Beschichtungsmaterial beaufschlagt werden, durch welche ein Luftstrom geleitet wird, der entstehendes Overspray des Beschichtungsmaterials aufnimmt und abführt;
wobei
c) der Luftstrom einer Abscheidevorrichtung der Beschichtungsanlage zugeführt wird, welche mit mehreren Filtermodulen betrieben wird, in denen ein Großteil zumindest der Feststoffe aus dem Overspray abgeschieden wird;
d) jedes Filtermodul nach Erreichen einer Grenzbeladung mit Overspray gegen ein leeres Filtermodul ausgetauscht wird;
e) ein Filtermodul zumindest thermisch teilregenerierbar ist;
**dadurch gekennzeichnet, dass**
f) die Anzahl der an dem Betriebsstandort zum Betrieb der Abscheidevorrichtung zur Verfügung stehenden Filtermodule eine Ist-Anzahl definiert; und
g) die Anzahl der an dem Betriebsstandort zum Betrieb der Abscheidevorrichtung erforderlichen Filtermodule eine Soll-Anzahl definiert; und
h) die Differenz zwischen der Ist-Anzahl und der Soll-Anzahl eine Bedarfszahl definiert, wenn die Ist-Anzahl kleiner ist als die Soll-Anzahl, oder eine Überschusszahl definiert, wenn die Ist-Anzahl größer ist als die Soll-Anzahl; und
i) ein Filtermodul-Pool bereitgestellt wird, der eine Bestands-Anzahl an Filtermodulen umfasst, von denen zumindest ein Teil an einem Pool-Standort gelagert wird, der von dem Betriebsstandort der Beschichtungsanlage verschieden ist; und
j) eine der Bedarfszahl entsprechende Anzahl an Filtermodulen aus dem Filtermodul-Pool physisch an den Betriebsstandort überführt wird, wodurch sich die Ist-Anzahl um die Bedarfszahl erhöht und sich die Bestands-Anzahl um die Bedarfszahl verringert; oder
k) eine der Überschusszahl entsprechende Anzahl an Filtermodulen dem Filtermodul-Pool zugeordnet wird, wodurch sich die Ist-Anzahl um die Überschusszahl verringert und sich die Bestands-Anzahl um die Überschusszahl erhöht.

2. Verfahren nach Anspruch 1, **dadurch gekennzeichnet, dass**
a) die Beschichtungsanlage eine erste Beschichtungsanlage mit einer ersten Abscheidvorrichtung und deren Betriebsstandort ein erster Betriebsstandort ist;
b) eine zweite Beschichtungsanlage mit einer zweiten Abscheidevorrichtung an einem zweiten Betriebsstandort vorhanden ist, der von dem ersten Betriebsstandort verschieden ist, wobei auch die zweite Abscheidevorrichtung mit einer Mehrzahl von Filtermodulen betrieben wird, und wobei die Filtermodule der ersten und der zweiten Abscheidevorrichtung zumindest zueinander kompatibel sind;
c) für die erste Abscheidevorrichtung und die zweite Abscheidevorrichtung jeweils gesondert eine Ist-Anzahl, eine Soll-Anzahl, eine Bedarfszahl und eine Überschusszahl ermittelt wird.

3. Verfahren nach Anspruch 2, **dadurch gekennzeichnet, dass** zumindest ein Teil der Filtermodule des Filtermodul-Pools an dem ersten Betriebsstandort und/oder an dem zweiten Betriebsstandort gelagert wird.

4. Verfahren nach Anspruch 3, **dadurch gekennzeichnet, dass**
a) eine dritte Beschichtungsanlage mit einer dritten Abscheidevorrichtung an einem dritten Betriebsstandort oder noch mehrere weitere Beschichtungsanlagen mitjeweils noch einer weiteren Abscheidevorrichtung an noch jeweils weiteren Betriebsstandorten vorhanden sind, die jeweils von dem ersten und dem zweiten Betriebsstandort verschieden sind, wobei auch die dritte oder die noch mehreren weiteren Abscheidevorrichtungen mit einer Mehrzahl von Filtermodulen betrieben werden und die Filtermodule aller Abscheidevorrichtungen zumindest zueinander kompatibel sind;
b) für die dritte oder für jede weitere Abscheidevorrichtung jeweils gesondert eine Ist-Anzahl, eine Soll-Anzahl, eine Bedarfszahl und eine Überschusszahl ermittelt wird.

5. Verfahren nach Anspruch 4, **dadurch gekennzeichnet, dass** zumindest ein Teil der Filtermodule des Filtermodul-Pools an einem, mehreren oder allen der Betriebsstandorte gelagert wird.

6. Verfahren nach einem der Ansprüche 1 bis 5, **dadurch gekennzeichnet, dass** eine oder mehrere Filtermodule verwendet werden, welche vollständig thermisch regenerierbar sind.

7. Verfahren nach einem der Ansprüche 1 bis 6, **dadurch gekennzeichnet, dass** die Filtermodule des Filtermodul-Pools ein Raumvolumen von 1 m³ bis 4 m³, insbesondere von etwa 2 m³ haben.

## Claims

1. Method for operating a plant system for coating objects, in particular vehicle bodies, wherein
a) a coating plant for coating objects is present at an operating site;
b) in the coating plant a coating material is applied to the objects in at least one coating booth, through which an air flow is directed, which absorbs and removes arising overspray of the coating material;
whereby
c) the air flow is fed to a separating device of the coating plant, which is operated with a plurality of filter modules in which a majority of at least the solid materials is separated from the overspray;
d) each filter module is replaced with an empty filter module after reaching a limit loading of overspray;
e) a filter module is at least thermally partially regenerable;
**characterised in that**
f) the number of filter modules available at the operating site for the operation of the separating device defines an actual number; and
g) the number of filter modules required at the operating site for the operation of the separating device defines a target number; and
h) the difference between the actual number and the target number defines a demand number in case that the actual number is less than the target number, or defines a surplus number in case that the actual number is greater than the target number; and
i) a filter module pool is provided comprising an inventory number of filter modules, at least a part of which is stored at a pool location that is different from the operating site of the coating plant; and
j) a number of filter modules corresponding to the demand number is physically transferred from the filter module pool to the operating site, whereby the actual number is increased by the demand number and the inventory number is reduced by the demand number; or
k) a number of filter modules corresponding to the surplus number is allocated to the filter module pool, whereby the actual number is reduced by the surplus number and the inventory number is increased by the surplus number.

2. Method according to claim 1, **characterised in that**
a) the coating plant is a first coating plant with a first separating device and its operating site is a first operating site;
b) a second coating plant with a second separating device is present at a second operating site which is different from the first operating site, wherein the second separating device is also operated with a plurality of filter modules, and wherein the filter modules of the first and second separating devices are at least compatible with one another;
c) an actual number, a target number, a demand number and a surplus number are determined separately for the first separating device and the second separating device.

3. Method according to claim 2, **characterised in that** at least some of the filter modules of the filter module pool are stored at the first operating site and/or at the second operating site.

4. Method according to claim 3, **characterised in that**
a) a third coating plant with a third separating device at a third operating site or a number of further coating plants, each with a respective further separating device, are present at further respective operating sites which are different in each case from the first and the second operating site, the third or the number of further separating devices also being operated with a plurality of filter modules and the filter modules of all the separating devices being at least compatible with one another;
b) an actual number, a target number, a demand number and a surplus number are determined separately for the third or for each additional separating device.

5. Method according to claim 4, **characterised in that** at least some of the filter modules of the filter module pool are stored at one, several or all of the operating sites.

6. Method according to one of claims 1 to 5, **characterised in that** one or more filter modules are used which are completely thermally regenerable.

7. Method according to one of claims 1 to 6, **characterised in that** the filter modules of the filter module pool have a room volume of 1 m³ to 4 m³, in particular of about 2 m³.

## Revendications

1. Procédé d'exploitation d'un système d'installations pour l'enduction d'objets, notamment de carrosseries de véhicule, lors duquel
a) une installation d'enduction pour l'enduction d'objets est présente sur un site d'exploitation ;
b) les objets sont sollicités avec du matériau d'enduction dans au moins une cabine d'enduction dans l'installation d'enduction, à travers laquelle un courant d'air est dirigé, lequel absorbe et évacue de la surpulvérisation du matériau d'enduction qui se forme ;
dans lequel
c) le courant d'air est acheminé à un dispositif de séparation de l'installation d'enduction, lequel est exploité avec plusieurs modules de filtre dans lesquels une grande partie au moins des solides est séparée de la surpulvérisation ;
d) chaque module de filtre est remplacé par un module de filtre vide après atteinte d'une charge limite en surpulvérisation ;
e) un module de filtre peut au moins être partiellement régénéré thermiquement ; **caractérisé en ce que**
f) le nombre des modules de filtre mis à disposition sur le site d'exploitation pour l'exploitation du dispositif de séparation définit un nombre réel ; et
g) le nombre des modules de filtre nécessaires sur le site d'exploitation pour l'exploitation du dispositif de séparation définit un nombre de consigne ; et
h) la différence entre le nombre réel et le nombre de consigne définit un nombre adapté aux besoins lorsque le nombre réel est inférieur au nombre de consigne ou définit un nombre excédentaire lorsque le nombre réel est supérieur au nombre de consigne ; et
i) un groupe de modules de filtre est mis à disposition, lequel comprend un nombre d'inventaire de modules de filtre parmi lesquels au moins une partie est stockée sur un site de groupe qui est différent du site d'exploitation de l'installation d'enduction ; et
j) un nombre de modules de filtre correspondant au nombre adapté aux besoins est physiquement transféré du groupe de modules de filtre au site d'exploitation, moyennant quoi le nombre réel augmente du nombre adapté aux besoins et le nombre d'inventaire diminue du nombre adapté aux besoins ; ou
k) un nombre de modules de filtre correspondant au nombre excédentaire est associé au groupe de modules de filtre, moyennant quoi le nombre réel diminue du nombre excédentaire et le nombre d'inventaire augmente du nombre excédentaire.

2. Procédé selon la revendication 1, **caractérisé en ce que**
a) l'installation d'enduction est une première installation d'enduction avec un premier dispositif de séparation et son site d'exploitation est un premier site d'exploitation ;
b) une deuxième installation d'enduction avec un deuxième dispositif de séparation est présente sur un deuxième site d'exploitation qui est différent du premier site d'exploitation, dans lequel le deuxième dispositif de séparation est également exploité avec une pluralité de modules de filtre, et dans lequel les modules de filtre du premier et du deuxième dispositif de séparation sont compatibles au moins l'un par rapport à l'autre ;
c) un nombre réel, un nombre de consigne, un nombre adapté aux besoins et un nombre excédentaire sont à chaque fois déterminés de manière séparée pour le premier dispositif de séparation et le deuxième dispositif de séparation.

3. Procédé selon la revendication 2, **caractérisé en ce qu'**au moins une partie des modules de filtre du groupe de modules de filtre est stockée sur le premier site d'exploitation et/ou sur le deuxième site d'exploitation.

4. Procédé selon la revendication 3, **caractérisé en ce que**
a) une troisième installation d'enduction avec un troisième dispositif de séparation est présente sur un troisième site d'exploitation ou encore plusieurs autres installations d'enduction avec à chaque fois encore un autre dispositif de séparation sont présentes sur à chaque fois encore d'autres sites d'exploitation qui sont à chaque fois différents du premier et du deuxième site d'exploitation, dans lequel le troisième ou les encore plusieurs autres dispositifs de séparation sont également exploités avec une pluralité de modules de filtre et les modules de filtre de tous les dispositifs de séparation sont compatibles au moins l'un par rapport à l'autre ;
b) un nombre réel, un nombre de consigne, un nombre adapté aux besoins et un nombre excédentaire sont à chaque fois déterminés de manière séparée pour le troisième ou pour chaque autre dispositif de séparation.

5. Procédé selon la revendication 4, **caractérisé en ce qu'**au moins une partie des modules de filtre du groupe de modules de filtre est stockée sur un, plusieurs ou l'ensemble des sites d'exploitation.

6. Procédé selon une des revendications 1 à 5, **caractérisé en ce qu'**un ou plusieurs modules de filtre sont utilisés, lesquels peuvent être régénérés entièrement thermiquement.

7. Procédé selon une des revendications 1 à 6, **caractérisé en ce que** les modules de filtre du groupe de modules de filtre ont un volume spatial de 1 m³ à 4 m³, notamment d'environ 2 m³.
